# EUROPÄISCHE PATENTSCHRIFT

(11) **EP 0 820 342 B1**
(45) Veröffentlichungstag und Bekanntmachung des Hinweises auf die Patenterteilung: **01.09.1999**
(21) Anmeldenummer: 96909040.6
(22) Anmeldetag: 06.04.1996
(51) Int. Cl.: B01D 53/22

(54) **VERFAHREN UND VORRICHTUNG ZUR REDUZIERUNG VON SCHADSTOFFEN, INSBESONDERE VON STICKOXIDEN IN VERBRENNUNGSABGASEN**
PROCESS AND DEVICE FOR REDUCING POLLUTANTS, ESPECIALLY NITROGEN OXIDES IN COMBUSTION EXHAUST GASES
PROCEDE ET DISPOSITIF PERMETTANT DE REDUIRE LE TAUX DE POLLUANTS, NOTAMMENT LES OXYDES D'AZOTE CONTENUS DANS DES GAZ D'ECHAPPEMENT

(30) Priorität: 11.04.1995 DE 19513654; 26.03.1996 DE 19611898
(43) Veröffentlichungstag der Anmeldung: 28.01.1998
(73) Patentinhaber: ROBERT BOSCH GMBH, 70442 Stuttgart (DE)
(72) Erfinder: GRÜNWALD, Werner, D-70839 Gerlingen (DE); DIETERICH, Klaus, D-70569 Stuttgart (DE); FRANKE, Steffen, D-71701 Schwieberdingen (DE)
(86) Internationale Anmeldenummer: DE9600643
(87) Internationale Veröffentlichungsnummer: WO9632181

(56) Entgegenhaltungen:
- EP-A- 0 290 970
- DE-A- 2 734 677
- DE-A- 4 201 423
- US-A- 4 264 338

## Beschreibung

Die Erfindung betrifft ein Verfahren zur Reduzierung von Schadstoffen, insbesondere von Stickoxiden in Verbrennungsabgasen, nach dem Oberbegriff des Anspruchs 1 und eine Vorrichtung zur Reduzierung von Schadstoffen nach dem Oberbegriff des Anspruchs 9.

### Stand der Technik

Verfahren und Vorrichtungen zur Reduzierung von Schadstoffen in Verbrennungsabgasen, bei einem unter Sauerstoffzufuhr ablaufenden Verbrennungsprozeß, sind bekannt. So wird beispielsweise bei Verbrennungskraftmaschinen in Kraftfahrzeugen, die ein Kraftstoff-Luft-Gemisch verwenden, das mit Hilfe eines Zündmittels gezündet wird, gemäß der DE-C 44 04 681, dem Sauerstoff-Stickstoff-Luftgemisch (Atmosphäre) vor Zufuhr in die Verbrennungskraftmaschine der Stickstoff entzogen. Hierzu wird das Sauerstoff-Stickstoff-Luftgemisch über eine Barriere geführt, die für den Stickstoff nicht durchlässig ist. Hierdurch wird erreicht, daß die Verbrennung weiterhin unter Zufuhr von der Umgebungsluft entnommenem Luftsauerstoff durchgeführt werden kann, während der in der Umgebungsluft vorhandene Luftstickstoff nicht dem Verbrennungsprozeß zugeführt wird. Das Entstehen von Stickoxiden während des Verbrennungsprozesses wird verhindert, zumindest drastisch reduziert.

Weiterhin sind keramische Bauelemente bekannt, die eine aus einem sauerstoffionenleitenden Material bestehende Membran aufweisen. Derartige Bauelemente werden, beispielsweise zur Bestimmung des Sauerstoffgehaltes in Abgasen von Verbrennungsprozessen, als sogenannte Lambdasonden eingesetzt. Diese Sauerstoffionenleitenden Membranen weisen hierbei bekannterweise bei unterschiedlichen Temperaturen und Druckverhältnissen eine unterschiedliche Sauerstoffionenleitfähigkeit auf.

Weiterhin sind aus der physikalischen Chemie sogenannte Zeolithe bekannt. Diese zeichnen sich durch eine Struktur mit großen inneren Hohlräumen aus, die durch Poren definierter Größe miteinander verbunden sind. Diese Poren definierter Größe lassen sich beispielsweise durch im Kristallgitter eingelagerte, frei bewegliche und in Lösung austauschbare Kationen im Bereich von wenigen Zehntel Angström (1 Å = 0.1 nm) einstellen. Werden derartige Zeolithe mit einem Sauerstoff-Stickstoff-Luftgemisch beaufschlagt, gelangen durch den sterischen Effekt nur solche Moleküle in das Innere der Kristallstruktur, deren Durchmesser kleiner als die Porenöffnungsweite ist. Es tritt somit eine Siebwirkung auf. Beim kinetischen Effekt diffundieren bestimmte Moleküle schneller in und durch die Kristallstruktur als andere, wodurch ebenfalls eine Trennwirkung hervorgerufen wird. Bei einer Zerlegung des Sauerstoff-Stickstoff-Luftgemisches beruht die Trennung von Stickstoff und Sauerstoff auf dem Gleichgewichtseffekt. Hier sind unterschiedliche Absorptionskräfte dafür verantwortlich, daß eine Komponente, beispielsweise der Stickstoff, stärker gebunden wird als eine andere Komponente, beispielsweise der Sauerstoff.

Aus der DE-A-4 201 423 ist weiterhin eine Vorrichtung zur Verminderung der Partikelemission von Dieselbrennkraftmaschinen bekannt, die aus einer seriellen Anordnung einer ersten und zweiten Membrantrenneinheit besteht, wobei die Membranen eine unterschiedliche Durchlässigkeit für Sauerstoff und Stickstoff aufweisen. Beide Trenneinheiten sind mit Drosselorganen versehen, die als Auslaßvorrichtung zur Regulierung des Retentatgasstromes und- druckes dienen.

Daneben ist aus DE-A-2 734 677 eine Vorrichtung zur Erzeugung eines an Sauerstoff angereicherten Gases mittels eines Druckwechselsadsorptionsverfahrens bekannt, die zum Betreiben einer Brennkraftmaschine mit einem Osmose- oder Diffusionsverfahren zur Erzeugung eines erhöhten Sauerstoffanteils aus Luft arbeitet.

### Vorteile der Erfindung

Das erfindungsgemäße Verfahren mit den im Anspruch 1 genannten Merkmalen bietet den Vorteil, daß das Abscheiden des Sauerstoffes aus dem Sauerstoff-Stickstoff-Luftgemisch mit einem relativ geringen Energieeinsatz erfolgen kann. In dem Sauerstoff-Stickstoff-Luftgemisch wird in einem ersten Schriftt eine Sauerstoff-Anreicherung (Anreicherungsschritt) durchgeführt. In einem daran anschließenden zweiten Schritt wird der Sauerstoff in reiner oder nahezu reiner Form aus dem sauerstoffangereicherten Sauerstoff-Stickstoff-Luftgemisch abgeschieden (Abscheidungs- oder Separationsschritt).

Die im ersten Verfahrensschritt durchgeführte Anreicherung des Sauerstoffes in dem Sauerstoff-Stickstoff-Luftgemisch kann beispielsweise mit Hilfe einer für Sauerstoff leichter als für Stickstoff durchlässigen Einrichtung oder Barriere, zum Beispiel einer Kuntststoffmembran oder einem Zeolithen, erreicht werden.

Bei der Verwendung von Kunststoffmembranen wird erfindungsgemäß in dem Sauerstoff-Stickstoff-Luftgemisch im ersten Verfahrensschritt mittels einer unterschiedlichen Sauerstoff-und Stickstoff-Permeabilität aufweisenden Kunststoffmembran eine Sauerstoff-Anreicherung durchgeführt. Sauerstoff kann die Membran schneller passieren, so daß dieser auf der Niederdruckseite der Membran angereichert wird.

Bei der Verwendung von Zeolithen werden diese bei höherem Druck dem Sauerstoff-Stickstoff-Luftgemisch ausgesetzt, wobei der Stickstoff bevorzugt absorbiert und gespeichert wird. Das bedeutet, daß der durchgehende Luftstrom mit Sauerstoff angereichert wird. Die Reinigung des Zeoliths vom Stickstoff geschieht dadurch, daß der Zeolith einem niederen Gasdruck ausgesetzt wird (Regenerationsschritt). Erfindungsgemäß ist für einen kontinuierlichen Betrieb der Wechselbetrieb zwischen mindestens zwei Zeolith-Stationen notwendig. Über Klappenventile werden die Gasströme so geschaltet, daß sich jeweils ein Zeolithgefäß im Sauerstoff-Anreicherungsschritt und das andere im Regenerationsschritt befindet.

Das die Barriere passierende Luftgemisch ist daher Sauerstoff-angereichert, wahrend im Raum vor der Barriere ein Sauerstoff-entreichertes Luftgemisch durch einen Auslaß abgeleitet wird.

In einem zweiten Verfahrensschritt wird das im ersten Verfahrensschritt Sauerstoff-angereicherte Sauerstoff-Stickstoff-Luftgemisch zur Abscheidung von reinem oder nahezu reinem Sauerstoff beispielsweise einer Keramikmembran zugeführt. Die Keramikmembran besteht vorzugsweise aus gemischt leitendem Material, das heißt, sie leitet sowohl Sauerstoff-Ionen als auch Elektronen. Die Keramikmembran ist erfindungsgemäß bevorzugt beheizt. Erfindungsgemäß kann vorgesehen sein, nur die Keramik, nicht aber das ihr zugeführte Sauerstoff-angereicherte Sauerstoff-Stickstoff-Luftgemisch zu beheizen. In vorteilhafter Weise wird jedoch auch das zugeführte Sauerstoff-angereicherte Sauerstoff-Stickstoff-Luftgemisch erhitzt, so daß dieses bei Auftreffen auf die erhitzte Keramik nicht zu deren Abkühlung führt. In besonders vorteilhafter Weise kann das zugeführte Sauerstoff-angereicherte Sauerstoff-Stickstoff-Luftgemisch mit Druck beaufschlagt werden. Durch die gemischt leitende Keramikmembran wird reiner beziehungsweise nahezu reiner Sauerstoff abgeschieden, während im Raum vor der Keramikmembran ein Sauerstoff-entreichertes Luftgemisch durch einen zweiten Auslaß abgeleitet wird.

Weiterhin wird erfindungsgemäß eine weitere Sauerstoff-Anreicherung und damit eine Erhöhung des Sauerstoff-Partialdrucks erreicht, indem, insbesondere nach dem ersten Verfahrensschritt, die jeweiligen Sauerstoff-entreicherten, abzuleitenden Luftgemische über weitere Einrichtungen, zum Beispiel Kunststoffmembranen, geleitetet werden, die eine erhöhte Durchlässigkeit für Stickstoff und eine verminderte Durchlässigkeit für Sauerstoff haben. Dadurch wird eine unerwünschte Abwanderung von Sauerstoff aus dem Verfahren gehemmt und der Sauerstoff-Partialdruck als treibende Kraft der Anreicherung und/oder Saparation an den für Sauerstoff leichter durchlässigen Membranen auf einem höheren Niveau gehalten, als wenn diese weiteren Einrichtungen nicht vorgesehen wären. Dies verbessert die Energiebilanz des erfindungsgemäßen Verfahrens beträchtlich.

Die erfindungsgemäße Vorrichtung zur Reduzierung von Schadstoffen mit den im Anspruch 9 genannten Merkmalen bietet den Vorteil, daß mittels einfacher Mittel auf kleinstem Bauraum eine energiearme Abscheidung von Sauerstoff aus einem Sauerstoff-Stickstoff-Luftgemisch möglich ist. Dadurch, daß die Anordnung zwischen einem Einlaß für das Sauerstoff-Stickstoff-Luftgemisch und einem Auslaß für den abgeschiedenen Sauerstoff zwei Einrichtungen aufweist, die jeweils eine unterschiedliche Durchlaßfähigkeit für den Sauerstoff und Stickstoff aufweisen und die die Vorrichtung in drei Kammern aufteilen, ist es vorteilhaft möglich, in einem ersten Verfahrensschritt ein mit Sauerstoff angereichertes Sauerstoff-Stickstoff-Luftgemisch zu erzeugen, aus dem dann in einem zweiten Verfahrensschritt des Sauerstoff abgeschieden wird. Die Einrichtungen zwischen den einzelnen Kammern gestatten eine unabhängige Behandlung des Sauerstoff-Stickstoff-Luftgemisches.

Die Erfindung sieht insbesondere vor, daß die erste und zweite Kammer jeweils einen Auslaß für ein Sauerstoff-entreichertes Sauerstoff-Stickstoff-Luftgemisch aufweisen. Außerdem ist mindestens der Auslaß der zweiten Kammer, bevorzugt beide Auslässe mit jeweils einer weiteren Einrichtung versehen, die unterschiedliche Durchlässigkeit für Sauerstoff und Stickstoff aufweist, und insbesondere für Stickstoff durchlässiger als für Sauerstoff ist. Eine derartige Einrichtung kann eine Membran sein, die eine erhöhte Durchlässigkeit für Stickstoff und eine verminderte Durchlässigkeit für Sauerstoff aufweist, so daß der Sauerstoff in der ersten und zweiten Kammer selektiv zurückgehalten und zusätzlich angereichert wird.

In bevorzugter Ausgestaltung der Erfindung ist vorgesehen, daß die erste Einrichtung druckabhängig und die zweite Einrichtung druckabhängig und/oder temperaturabhängig arbeitet. In besonders bevorzugter Ausführungsform der Erfindung kann vorgesehen sein, daß die erste und zweite Einrichtung weitgehend unabhängig voneinander mit unterschiedlichem Druck beaufschlagt werden können, so daß durch das Erzeugen von zusätzlichen Druckgefällen eine nochmalige Verbesserung der Energiebilanz der Sauerstoffanreicherung und -abscheidung erzielt werden kann. Die in den Auslässen vorzugsweise vorgesehenen weiteren Einrichtungen arbeiten ebenfalls bevorzugt druck- und/oder temperaturabhängig. Hierdurch kann mittels relativ einfach zur Verfügung stehender Medien, nämlich einem Druck und einer Temperatur, die Vorrichtung auf einen unterschiedlichen Grad einer Sauerstoffabscheidung eingestellt werden.

Vorteilhafte Ausgestaltungen der Erfindung ergeben sich aus den übrigen in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: schematisch eine Anordnung zum Abscheiden von Sauerstoff aus einem Sauerstoff-Stickstoff-Luftgemisch,
- Figur 2: schematisch eine weitere Anordnung zum Abscheiden von Sauerstoff aus einem Sauerstoff-Stickstoff-Luftgemisch, in der die Auslässe mit weiteren Einrichtungen versehen sind,
- Figur 3: schematisch eine weitere Anordnung zum Abscheiden von Sauerstoff aus einem Sauerstoff-Stickstoff-Luftgemisch, in der eine Kammer in einen Niederdruck- und einen Hochdruckbereich unterteilt ist, und
- Figur 4: eine schematische Anordnung einer Einrichtung zur Anreicherung des Sauerstoffs in einem Sauerstoff-Stickstoff-Luftgemisch.

### Beschreibung der Ausführungsbeispiele

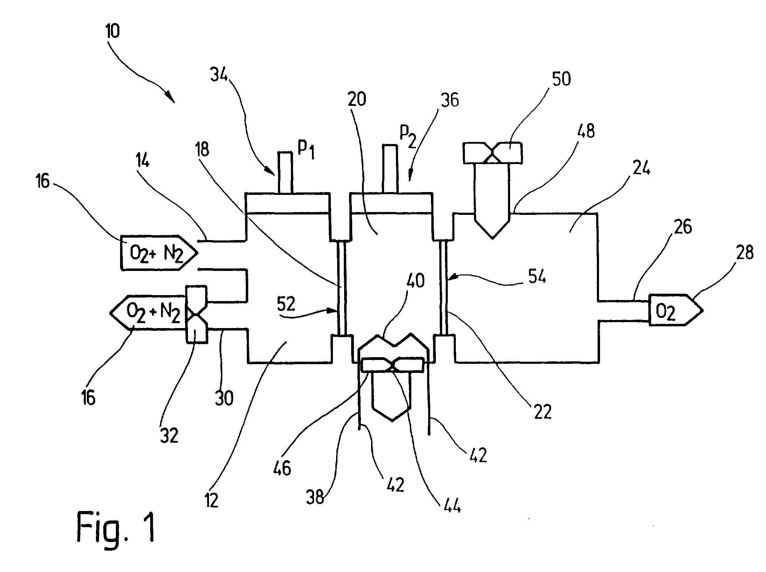

In der Figur 1 ist schematisch eine allgemein mit 10 bezeichnete Vorrichtung zum Ausscheiden von Sauerstoff aus einem Sauerstoff-Stickstoff-Luftgemisch gezeigt. Die Vorrichtung 10 weist eine erste Kammer 12 auf, die mit einem Einlaß 14 für das Sauerstoff-Stickstoff-Luftgemisch 16 versehen ist. Die erste Kammer 12 ist über eine noch zu erläuternde erste Einrichtung 18 von einer zweiten Kammer 20 getrennt. Die zweite Kammer 20 ist über eine zweite -ebenfalls noch zu erläuternde- Einrichtung 22 von einer dritten Kammer 24 getrennt. Die dritte Kammer 24 besitzt einen Auslaß 26 für mittels der Vorrichtung 10 abgeschiedenen Sauerstoff 28. Die erste Kammer 12 ist weiterhin mit einem Auslaß 30 für das Sauerstoff-Stickstoff-Luftgemisch 16 versehen, wobei in dem Auslaß 30 ein Drosselventil 32 angeordnet ist. Weiterhin sind an der ersten Kammer 12 Mittel 34 zum Beaufschlagen der ersten Kammer 12 mit einem ersten Druck p1 vorgesehen. Die zweite Kammer 20 besitzt Mittel 36 zum Beaufschlagen der zweiten Kammer 20 mit einem Druck p2. Weiterhin ist in der zweiten Kammer 20 eine Heizeinrichtung 38 vorgesehen, die beispielsweise eine innerhalb der Kammer 20 angeordnete Heizwendel 40 aufweist, die über Anschlüsse 42 mit einer Heizspannung verbindbar ist. Darüber hinaus besitzt die zweite Kammer 20 einen Auslaß 44, in dem ein Drosselventil 46 angeordnet ist. Die dritte Kammer 24 besitzt einen Einlaß 48, in dem ein weiteres Drosselventil 50 angeordnet ist.

Die erste Einrichtung 18 besteht aus einer Membran 52, die eine unter einer Druckdifferenz zwischen der ersten Kammer 12 und der zweiten Kammer 20 unterschiedliche Durchlaßfähigkeit (Permeationsrate) für Sauerstoff O₂ und Stickstoff N₂ aufweist. Die zweite Einrichtung 22 besteht aus einer gemischtleitenden Keramikmembran 54, einem sogenannten Perovskit. Mittels der in der Figur 1 dargestellten erfindungsgemäßen Vorrichtung läuft das erfindungsgemäße Verfahren folgendermaßen ab:

Über den Einlaß 14 wird die erste Kammer 12 mit einem Sauerstoff-Stickstoff-Luftgemisch 16 beaufschlagt. Dieses Sauerstoff-Stickstoff-Luftgemisch besteht üblicherweise aus der Umgebungsluft der Vorrichtung 10. Das Drosselventil 32 des Auslasses 30 der ersten Kammer 12 führt zu einem geringeren Querschnitt des Auslasses 30 gegenüber dem Querschnitt des Einlasses 14. Über das Mittel 34 wird die erste Kammer 12 mit dem Druck p1 beaufschlagt. Hierdurch stellt sich zwischen der Kammer 12 und der zweiten Kammer 20 eine Druckdifferenz ein, die an den beiden Seiten der Membran 52 anliegt. Da die Membran 52 eine unterschiedliche Durchlaßfähigkeit für den Sauerstoff O₂ und den Stickstoff N₂ bei einer Druckdifferenz aufweist, kann der Sauerstoff O₂ schneller durch die Membran 52 diffundieren als der Stickstoff N₂. Dies führt dazu, daß in die zweite Kammer 20 ein größerer Anteil des Sauerstoffes O₂ diffundiert als ein Anteil des Stickstoffes N₂. Die erste Kammer 12 wird hierbei vorzugsweise permanent mit dem Druck p1 beaufschlagt, so daß das Durchdiffundieren des Sauerstoffes O₂ in größeren Mengen und des Stickstoffes N₂ in geringeren Mengen durch die Membran 52 kontinuierlich erfolgt. Das überschüssige Sauerstoff-Stickstoff-Luftgemisch 16 wird über das Drosselventil 32 des Auslasses 30 kontinuierlich und kontrolliert abgelassen, wobei das hier austretende Sauerstoff-Stickstoff-Luftgemisch 16 einen geringeren Sauerstoffanteil O₂ aufweist als das über den Einlaß 14 zugeführte Sauerstoff-Stickstoff-Luftgemisch.

Mittels der ersten Einrichtung 18 wird somit erreicht, daß in der zweiten Kammer 20 ein Sauerstoff-Stickstoff-Luftgemisch anliegt, das einen höheren Sauerstoffanteil O₂ aufweist als das am Einlaß 14 anliegende Sauerstoff-Stickstoff-Luftgemisch 16. Dieses mit Sauerstoff O₂ angereicherte Gemisch wird nunmehr mittels der Heizeinrichtung 38 erhitzt und mit dem Mittel 36 mit einem Druck p2 beaufschlagt. Hierdurch wird das Sauerstoff-Stickstoff-Luftgemisch in der zweiten Kammer 20 komprimiert und gegen die Keramikmembran 54 gedrückt. Ein kontrollierter Druckaufbau in der zweiten Kammer 20 ist über eine Stellung des Drosselventils 46 einstellbar. Die Keramikmembran 54 ist gemischtleitend, wobei eine Beschleunigung der Sauerstoffionen in Richtung der dritten Kammer 24 erfolgt. Da die Sauerstoffionen ein negatives Potential aufweisen, findet entgegengesetzt eine Elektronenleitung durch die Keramikmembran 54 statt. Diese ist somit als gemischtleitende Keramikmembran 54 ausgebildet. Als treibende Kraft des Sauerstoffionentransports fungiert der Gradient des Sauerstoff-Partialdrucks über der Keramikmembran 54. Somit kann über eine Einstellung eines Druckes p2 in der zweiten Kammer 20 der Anteil der Sauerstoffionen 2O²⁻ eingestellt werden, der während einer bestimmten Zeiteinheit von der zweiten Kammer 20 in die dritte Kammer 24 diffundiert.

Da das Sauerstoff-Stickstoff-Luftgemisch in der Kammer 20 zum Erreichen des Diffusionsvorgangs der Sauerstoffionen durch die Keramikmembran 54 ein bestimmtes Wärmepotential aufweisen muß, ist die Heizeinrichtung 38 vorgesehen. Hierbei ist jedoch gegenüber einem üblichen Erhitzen des Sauerstoff-Stickstoff-Luftgemisches ein erheblich geringerer Energieeinsatz notwendig, da bereits ein mit Sauerstoff O₂ angereichertes Sauerstoff-Stickstoff-Luftgemisch erhitzt werden muß. Der relative Anteil des Stickstoffes N₂ ist somit geringer in bezug auf die Gesamtzusammensetzung, so daß relativ weniger Stickstoff mit aufgeheizt zu werden braucht. Darüber hinaus ergibt sich durch das mit Sauerstoff O₂ angereicherte Sauerstoff-Stickstoff-Luftgemisch innerhalb der zweiten Kammer 20 ein höherer Sauerstoff-Partialdruck, so daß der für die Diffusion der Sauerstoffionen durch die Keramikmembran 54 aufzubringende Druck p2 relativ gering ausfallen kann. Hierdurch kommt es neben der Einsparung an Heizenergie zu einer Einsparung an Kompressionsenergie.

Insgesamt ergibt sich durch die Kopplung, das heißt Vorschaltung der Membran 52 (Sauerstoffanreicherung) vor die Keramikmembran 54 (Sauerstoffseparation) eine geringere spezifische Separationsleistung (Gesamtleistung/ separierter Sauerstoffmenge) wegen der geringeren Menge zu erwärmenden und zu komprimierenden Stickstoffs N₂ und wegen des erhöhten Sauerstoffpartialdrucks als treibende Separationskraft, infolge der erwähnten Sauerstoff-Konzentration.

Die in die dritte Kammer 24 eindiffundierten Sauerstoffionen können über den Einlaß 48 mit einem Inertgas vermischt werden, das den Transport des Sauerstoffes O₂ über den Auslaß 26 zu einer Verbrennungskammer übernimmt, indem ein Verbrennungsprozeß unter Zufuhr des Sauerstoffes ablauft. Als Inertgas zum Transport des Sauerstoffes O₂ kann beispielsweise ein Verbrennungsabgas des Verbrennungsprozesses genutzt werden, das über eine Kurzschlußleitung dem Verbrennungsprozeß wieder zugeführt wird. Dem Verbrennungsprozeß steht hierbei durch die eindiffundierten Sauerstoffionen genügend Sauerstoff zur Verfügung. Der ursprünglich in dem Sauerstoff-Stickstoff-Luftgemisch 16 vorhandene Stickstoff N₂ wird somit von der Teilnahme an dem Verbrennungsprozeß ausgeschlossen, so daß die Bildung von Stickoxiden NOₓ während des Verbrennungsprozesses drastisch reduziert wird und lediglich ein Restanteil aufgrund des Stickstoff-Anteils des Kraftstoffes verbleibt.

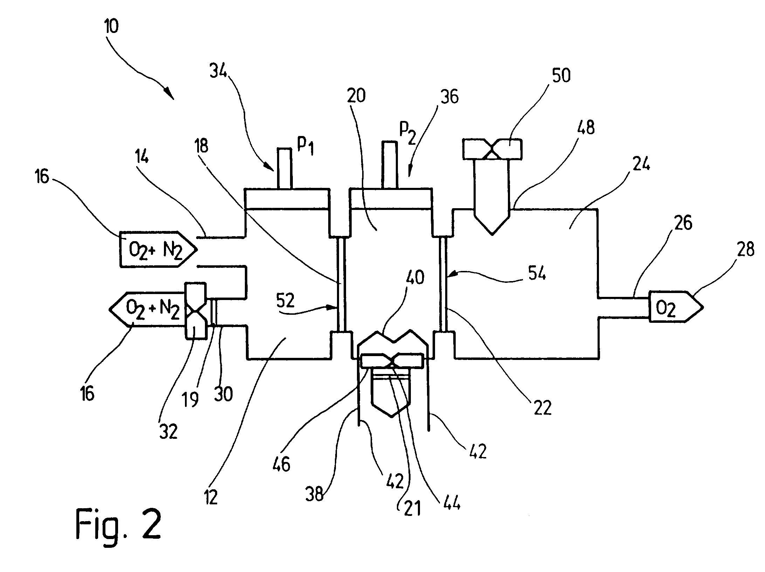

Die Anordnung der Figur 2 entspricht der der Figur 1, wobei jedoch die Auslässe 30 und 44 mit weiteren Einrichtungen 19 und 21 versehen sind. Diese Einrichtungen bestehen jeweils aus einer Membran, die eine erhöhte Durchlässigkeit für Stickstoff und eine verminderte Durchlässigkeit für Sauerstoff aufweist. In Figur 2 ist die Einrichtung 19 druckseitig und die Einrichtung 21 druckabgewandt des Drosselventils 32 beziehungsweise 46 angeordnet. Andere Relativanordnungen von Drosselventil 32 beziehungsweise 46 zu Einrichtung 19 beziehungsweise 21 sind jedoch auch möglich, beispielsweise die Anordnung der Einrichtung 19 auf der druckabgewandten Seite des Drosselventils 32 und/oder die Anordnung der Einrichtung 21 auf der dem Druck zugewandten Seite des Drosselventils 46. Erfindungsgemäß kann auch vorgesehen sein, die Drosselventile 32 und/oder 46 durch die Einrichtungen 19 und/oder 21 zu ersetzen.

Das mittels dieser Vorrichtung durchgeführte Verfahren entspricht dem zu Figur 1 geschilderten, wobei jedoch das durch die Auslässe 30 und 44 austretende Sauerstoff-entreicherte Sauerstoff-Stickstoff-Luftgemisch durch die für Stickstoff leichter als für Sauerstoff durchlässigen weiteren Einrichtungen 19 und 21 geleitet wird, so daß die unerwünschte Abwanderung von Sauerstoff aus den Kammern 12 und 20 gehemmt wird. Es ergibt sich ein gegenüber einer Vorrichtung ohne diese weiteren Einrichtungen 19 und/oder 21 auf einem höheren Niveau gehaltener Sauerstoff-Partialdruck in diesen beiden Kammern, so daß die für die Anreicherung und Abscheidung aufzuwendende Energie weiter reduziert wird.

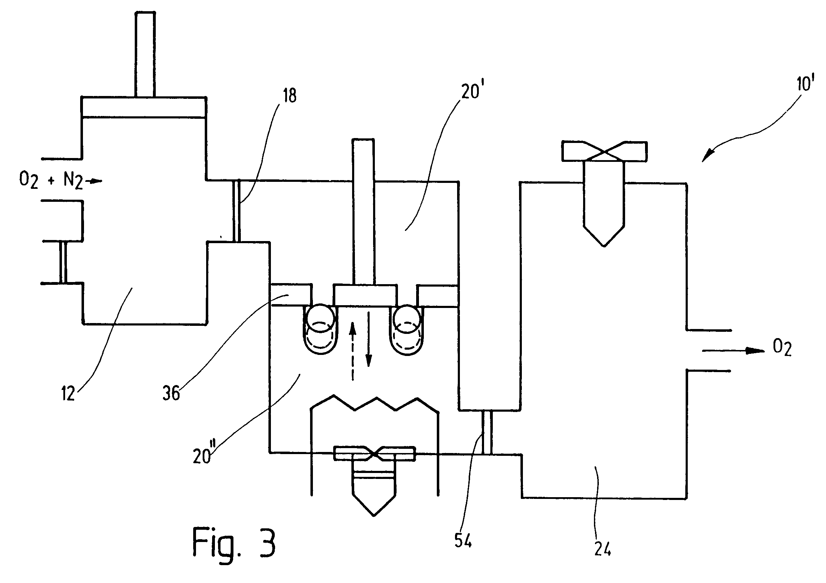

In Figur 3 ist schematisch eine mit 10' bezeichnete Vorrichtung zum Anreichern und Ausscheiden von Sauerstoff gezeigt, die der in Figur 2 dargestellten Vorrichtung entspricht, wobei jedoch die Kammer 20 in einen der Einrichtung 18 zugeordneten Niederdruckbereich 20' und einen der Einrichtung 54 zugeordneten Hochdruckbereich 20'' aufgeteilt ist. Der Niederdruckbereich 20' und der Hochdruckbereich 20'' sind durch die Einrichtung 36, die beispielsweise als Vakuumpumpe ausgeführt sein kann, druckmäßig gekoppelt. Die Einrichtung 18 läßt sich so mit einem anderen Druck beaufschlagen als die Einrichtung 54. Durch die Aufteilung der Kammer 20 in Bereiche 20' und 20'' mit unterschiedlichen Druckverhältnissen können zusätzliche, die Sauerstoffanreicherung und -separation treibende Druckgefälle eingestellt werden. Die Erfindung umfaßt selbstverständlich auch eine mehrstufige Ausführung der Einrichtung 36, so daß die Einstellung im wesentlichen unabhängiger Drücke beispielsweise in Bereichen 20' und 20'' ermöglicht wird. Der Niederdruckbereich 20' weist in vorteilhafter Weise einen Unterdruck relativ zur Kammer 12 auf, so daß sich hier ein zusätzlich die Sauerstoffanreicherung treibendes Druckgefälle einstellt. In umgekehrter Weise weist der Hochdruckbereich 20'' einen Überdruck relativ zur Kammer 24 auf, so daß auch hier ein die Sauerstoffseparation begünstigendes zusätzliches Druckgefälle vorliegt.

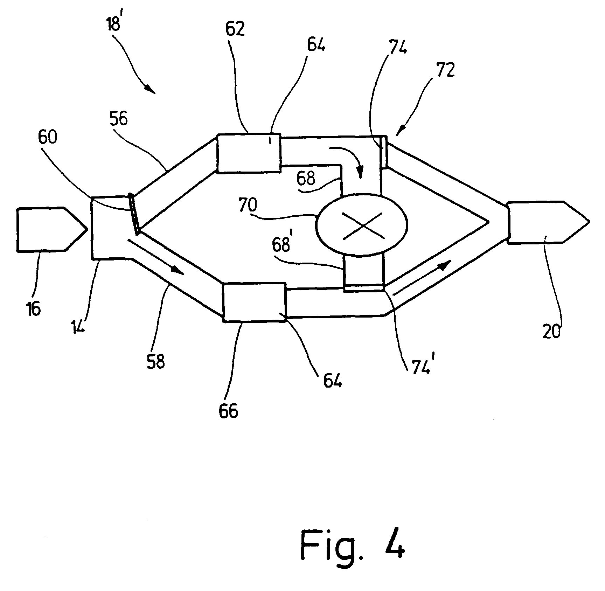

In der Figur 4 ist ein weiteres Ausführungsbeispiel der ersten Einrichtung 18 dargestellt. Die Einrichtung 18' der Figur 4 kann anstelle der bereits zu Figur 1 erläuterten Einrichtung 18 eingesetzt werden, wobei trotz eines teilweise unterschiedlichen Aufbaus zum besseren Verständnis gleiche Teile mit gleicher Funktion mit gleichen Bezugszeichen versehen sind.

Die Einrichtung 18' besitzt den Einlaß 14 für das Sauerstoff-Stickstoff-Luftgemisch 16. Der Einlaß 14 ist mit einem ersten Kanal 56 und einem zweiten Kanal 58 verbunden. Die Kanäle 56 beziehungsweise 58 sind über eine Einrichtung 60, beispielsweise eine Klappe, alternierend mit dem Einlaß 14 verbindbar beziehungsweise zu diesem abschottbar. In dem Kanal 56 ist ein Bereich 62 vorgesehen, der mit einem Zeolith 64 ausgestattet ist. Entsprechend besitzt der Kanal 58 einen Bereich 66, der ebenfalls mit Zeolith 64 ausgestattet ist. In den jeweils mit dem Zeolith 64 ausgestatteten Bereichen 62 und 66 der Kanäle 56 und 58 ist das Zeolith 64 vorzugsweise über den gesamten Querschnitt der Kanäle 56 beziehungsweise 58 angeordnet. Die Kanäle 56 und 58 münden jeweils in der zweiten Kammer 20 der Einrichtung 10 (Figur 1). Zwischen den Bereichen 62 und 66 mit dem Zeolith 64 und der Kammer 20 sind die Kanäle 56 und 58 über eine Abzweigung 68 beziehungsweise 68' mit einer Fördereinrichtung 70, beispielsweise eine Pumpe, verbunden. Zwischen den Abzweigungen 68 beziehungsweise 68' und der zweiten Kammer 20 sind die Kanäle 56 beziehungsweise 58 jeweils über eine alternierend ansteuerbare Absperreinrichtung 72 mit der Kammer 20 verbindbar beziehungsweise von dieser abschottbar. Die Absperreinrichtung 72 besitzt zwei miteinander gekoppelte Klappenventile 74 beziehungsweise 74', die alternierend die Fördereinrichtung 70 oder die Kammer 20 mit dem Kanal 56 beziehungsweise 58 verbinden.

Die in Figur 4 gezeigte Einrichtung 18' übt folgende Funktion aus:

Im Ausgangszustand verschließt die Einrichtung 60 den Kanal 56, so daß der Kanal 58 mit dem Einlaß 14 verbunden ist. Gleichzeitig ist die Absperreinrichtung 72 so geschaltet, daß das Klappenventil 74' den Abzweig 68' abdichtet und der Kanal 58 mit der zweiten Kammer 20 verbunden ist. Der erste Kanal 56 ist über den Abzweig 68 mit der Fördereinrichtung 70 verbunden, wahrend das Klappenventil 74 den Kanal 56 zu der zweiten Kammer 20 abschottet. Über den Einlaß 14 wird die Einrichtung 18' mit dem Sauerstoff-Stickstoff-Luftgemisch 16 unter einem Druck von ca. 1 bar beaufschlagt. Das Sauerstoff-Stickstoff-Luftgemisch 16 wird so auf das in dem Bereich 66 des Kanals 58 angeordnete Zeolith 64 geführt. Das Zeolith 64 besitzt eine derartige Stuktur, daß die Stickstoffmoleküle des Sauerstoff-Stickstoff-Luftgemisches 16 absorbiert werden, während die Sauerstoffmoleküle den Bereich 66 passieren können. Somit wird erreicht, daß in der zweiten Kammer 20 ein Sauerstoff-Stickstoff-Luftgemisch 16 mit einem höheren Sauerstoffanteil gegenüber dem Einlaß 14 anliegt. Aus diesem mit Sauerstoff angereicherten Sauerstoff-Stickstoff-Luftgemisch wird dann - wie bereits zu Figur 1 erläutert - der Sauerstoff separiert.

Da der Bereich 66 mit dem Zeolith 64 bekanntermaßen nur eine bestimmte Speicherfähigkeit besitzt und es damit zu einer Sättigung der Absorption des Stickstoffes kommt, wird die Einrichtung 18' wählbar, beispielsweise zeitgesteuert, wie folgt umgeschaltet. Die Klappe der Einrichtung 60 wird derart umgeschaltet, daß der Kanal 56 mit dem Einlaß 14 verbunden wird, während der Kanal 58 zu dem Einlaß 14 abgeschottet wird. Gleichzeitig schaltet die Absperreinrichtung 72 um, so daß das Klappenventil 74 den Abzweig 68 absperrt und den Kanal 56 mit der zweiten Kammer 20 verbindet. Das Klappenventil 74' gibt gleichzeitig den Abzweig 68' frei und schottet den Kanal 58 gegenüber der zweiten Kammer 20 ab. Über die Fordereinrichtung 70 wird nunmehr das Zeolith 64 in dem Bereich 66 mit einem Unterdruck beaufschlagt. Hierdurch kommt es bekanntermaßen zu einer Regenerierung des Zeoliths 64 in dem Bereich 66. Durch diesen Druckwechsel an dem Zeolith 64 in dem Bereich 66 wird der zuvor absorbierte Stickstoff aus dem Sauerstoff-Stickstoff-Luftgemisch 16 mittels der Fördereinrichtung 70 abgesaugt, so daß dieses quasi von den Stickstoffmolekülen gereinigt wird.

Während das Zeolith 64 in dem Bereich 66 regeneriert wird, wird das Sauerstoff-Stickstoff-Luftgemisch 16 über das Zeolith 64 in dem Bereich 62 des Kanals 56 geleitet. Hierbei wird über den Kanal 56 in der bereits beschriebenen Weise der zweiten Kammer 20 mit Sauerstoff angereichertes Sauerstoff-Stickstoff-Luftgemisch 16 zugeführt.

Durch den gewählten Aufbau der Einrichtung 18', insbesondere durch die Anordnung der Einrichtung 60 beziehungsweise der Absperreinrichtung 72 wird ein kontinuierlicher Betrieb gewährleistet, da das Zeolith 64 in den Bereichen 62 beziehungsweise 66 abwechselnd den Stickstoff des Sauerstoff-Stickstoff-Luftgemisches absorbiert beziehungsweise regeneriert.

Mittels der Einrichtung 18' ist eine Anreicherung des Sauerstoffs in dem Sauerstoff-Stickstoff-Luftgemisch auf über 50 % möglich. Dieses mit dem Sauerstoff angereicherte Luftgemisch wird nun, wie bereits zu Figur 1 erläutert, der zweiten Einrichtung 22 zugeführt, das heißt, unter Temperatur- und/oder Druckeinwirkung, auf die gemischtleitende Keramikmembran 54 geführt.

Eine sehr vorteilhafte Anwendung der Vorrichtung 10 ergibt sich beispielsweise bei der Zufuhr eines Kraftstoff-Luft-Gemisches für eine Verbrennungskraftmaschine in Kraftfahrzeugen. Der Ausstoß von Stickoxiden wird bei Kraftfahrzeugen mit der erfindungsgemäßen Vorrichtung 10 verhindert, zumindest erheblich reduziert.

## Patentansprüche

1. Verfahren zur Reduzierung von Schadstoffen, insbesondere von Stickoxiden in Verbrennungsabgasen, bei einem unter Sauerstoffzufuhr ablaufenden Verbrennungsprozeß, wobei der Sauerstoff aus einem Sauerstoff/Stickstoff-Luftgemisch in einem zweistufigen Verfahren abgeschieden wird, dadurch gekennzeichnet, daß in mindestens einer Stufe das Sauerstoff entreicherte Sauerstoff/Stickstoff-Luftgemisch über eine Auslaßvorrichtung abgeführt wird, die mit Mitteln versehen ist, die bewirken, daß die Auslaßvorrichtung für Stickstoff durchlässiger als für Sauerstoff ist.

2. Verfahren nach Anspruch 1, dadurch gekennzeichnet, daß dem Sauerstoff-Stickstoff-Luftgemisch in einer ersten Stufe Stickstoff entzogen wird und von dem so erhaltenen, mit Sauerstoff angereicherten Sauerstoff-Stickstoff-Luftgemisch anschließend, vorzugsweise ausschließlich, der Sauerstoff dem Verbrennungsprozeß zugeführt wird.

3. Verfahren nach einem der vorhergehenden Ansprüche, dadurch gekennzeichnet, daß das Sauerstoff-Stickstoff-Luftgemisch zur Anreicherung mit Sauerstoff in einem ersten Verfahrensschritt durch eine Barriere geführt wird, die für den Sauerstoff durchlässiger ist als für den Stickstoff.

4. Verfahren nach einem der vorhergehenden Ansprüche, dadurch gekennzeichnet, daß das Sauerstoff-Stickstoff-Luftgemisch unter Druck auf die Barriere und/oder die Auslaßvorrichtung gegeben wird.

5. Verfahren nach einem der vorhergehenden Ansprüche, dadurch gekennzeichnet, daß in einem zweiten Verfahrensschritt aus dem mit Sauerstoff angereicherten Sauerstoff-Stickstoff-Luftgemisch anschließend der Sauerstoff mittels einer Diffusionseinrichtung in ein Verbrennungsgas diffundiert wird.

6. Verfahren nach einem der vorhergehenden Ansprüche, dadurch gekennzeichnet, daß das mit Sauerstoff angereicherte Sauerstoff-Stickstoff-Luftgemisch komprimiert wird.

7. Verfahren nach einem der vorhergehenden Ansprüche, dadurch gekennzeichnet, daß das mit Sauerstoff angereicherte Sauerstoff-Stickstoff-Luftgemisch erwärmt wird.

8. Verfahren nach einem der vorhergehenden Ansprüche, dadurch gekennzeichnet, daß über die Einstellung eines Druckes und/oder einer Temperatur des mit Sauerstoff angereicherten Sauerstoff-Stickstoff-Luftgemisches die Diffusion von Sauerstoff in das Verbrennungsgas pro Zeiteinheit beeinflußt wird.

9. Vorrichtung zur Reduzierung von Schadstoffen, insbesondere von Stickoxiden in Verbrennungsabgasen, bei einem unter Sauerstoffzufuhr ablaufenden Verbrennungsprozeß, mit einer Anordnung zum Abscheiden des Sauerstoffes aus einem Sauerstoff-Stickstoff-Luftgemisch, wobei die Vorrichtung (10) zwischen einem Einlaß (14) für das Sauerstoff-Stickstoff-Luftgemisch (16) und einem Auslaß (26) für den abgeschiedenen Sauerstoff zwei Einrichtungen (18, 18', 22) aufweist, die jeweils eine unterschiedliche Durchlaßfähigkeit für Sauerstoff und Stickstoff aufweisen, dadurch gekennzeichnet, daß die Vorrichtung (10) mittels der Einrichtungen (18, 18', 22) in drei Kammern (12, 20, 24) unterteilt ist und mindestens die zweite Kammer (20) mit einer Auslaßvorrichtung (12, 30, 44) verbunden ist, die Mittel (19, 21) aufweist, die für Stickstoff durchlässiger als für Sauerstoff sind.

10. Vorrichtung nach Anspruch 9, dadurch gekennzeichnet, daß die Einrichtungen (18, 18', 22) unabhängig voneinander angeordnet sind.

11. Vorrichtung nach einem der vorhergehenden Ansprüche, dadurch gekennzeichnet, daß eine erste Einrichtung (18, 18') druckabhängig arbeitet.

12. Vorrichtung nach einem der vorhergehenden Ansprüche, dadurch gekennzeichnet, daß eine zweite Einrichtung (22) druckabhängig und/oder temperaturabhängig arbeitet.

13. Vorrichtung nach einem der vorhergehenden Ansprüche, dadurch gekennzeichnet, daß eine erste Kammer (12) mit dem Einlaß (14) und eine dritte Kammer (24) mit dem Auslaß (26) verbunden ist.

14. Vorrichtung nach einem der vorhergehenden Ansprüche, dadurch gekennzeichnet, daß die Mittel (19, 21) von jeweils einer Membran gebildet werden.

15. Vorrichtung nach einem der vorhergehenden Ansprüche, dadurch gekennzeichnet, daß die erste Einrichtung (18) zwischen der ersten Kammer (12) und der zweiten Kammer (20) und die zweite Einrichtung (22) zwischen der Zweiten Kammer (20) und der dritten Kammer (24) angeordnet ist.

16. Vorrichtung nach einem der vorhergehenden Ansprüche, dadurch gekennzeichnet, daß die erste und die zweite Kammer (12, 20) unabhängig voneinander mit einem Druck (p1, p2) beaufschlagbar sind.

17. Vorrichtung nach einem der vorhergehenden Ansprüche, dadurch gekennzeichnet, daß die zweite Kammer (20) beheizbar ist.

18. Vorrichtung nach einem der vorhergehenden Ansprüche, dadurch gekennzeichnet, daß die erste Einrichtung (18) von einer Membran gebildet wird, deren Durchlaßrate für Sauerstoff O₂ und Stickstoff N₂ bei einer Druckdifferenz zwischen der ersten Kammer (12) und der zweiten Kammer (20) unterschiedlich groß ist, und die insbesondere für Sauerstoff durchlässiger als für Stickstoff ist.

19. Vorrichtung nach einem der vorhergehenden Ansprüche, dadurch gekennzeichnet, daß die erste Einrichtung (18') zumindest bereichsweise ein Zeolith (64) aufweist, das eine Stickstoff N₂ absorbierende Struktur besitzt.

20. Vorrichtung nach Anspruch 19, dadurch gekennzeichnet, daß die Einrichtung (18') Kanäle (56, 58) aufweist, die jeweils einen Bereich (62, 66) mit Zeolith (64) besitzen und die abwechselnd mit dem Sauerstoff-Stickstoff-Luftgemisch (16) beaufschlagbar und mit der zweiten Kammer (20) verbindbar sind.

21. Vorrichtung nach einem der Ansprüche 19 oder 20, dadurch gekennzeichnet, daß der Einrichtung (18') einer Fördereinrichtung (70) zugeordnet ist, über die das Zeolith (64) mit einem Unterdruck zur Regenerierung beaufschlagbar ist.

22. Vorrichtung nach einem der vorhergehenden Ansprüche, dadurch gekennzeichnet, daß die zweite Einrichtung (22) aus einer gemischtleitenden Keramikmembran (54) besteht, die zwischen der zweiten Kammer (20) und der dritten Kammer (24) angeordnet ist.

## Claims

1. Method for reducing pollutants, in particular nitrogen oxide in combustion exhaust gases, in the case of a combustion process being carried out with the supply of oxygen, the oxygen being separated from an oxygen/nitrogen air mixture in a two-stage method, characterized in that in at least one stage the oxygen-depleted oxygen/nitrogen air mixture is discharged via an outlet device which is provided with means for making the outlet device more permeable to nitrogen than to oxygen.

2. Method according to Claim 1, characterized in that the oxygen-nitrogen air mixture has nitrogen removed in a first stage and the oxygen is subsequently fed to the combustion process, preferably exclusively, from the oxygen-enriched oxygen-nitrogen air mixture thus obtained.

3. Method according to one of the preceding claims, characterized in that the oxygen-nitrogen air mixture is fed through a barrier which is more permeable to oxygen than to nitrogen in order to be enriched with oxygen in a first method step.

4. Method according to one of the preceding claims, characterized in that the oxygen-nitrogen air mixture is delivered to the barrier and/or the outlet device under pressure.

5. Method according to one of the preceding claims, characterized in that, in a second method step, the oxygen is subsequently diffused using a diffusion device into a combustion gas from the oxygen-enriched oxygen-nitrogen air mixture.

6. Method according to one of the preceding claims, characterized in that the oxygen-enriched oxygen-nitrogen air mixture is compressed.

7. Method according to one of the preceding claims, characterized in that the oxygen-enriched oxygen-nitrogen air mixture is heated.

8. Method according to one of the preceding claims, characterized in that the diffusion of oxygen into the combustion gas per unit time is affected by adjusting a pressure and/or a temperature of the oxygen-enriched oxygen-nitrogen air mixture.

9. Device for reducing pollutants, in particular nitrogen oxide in combustion exhaust gases, in the case of a combustion process being carried out with the supply of oxygen, having an arrangement for separating the oxygen from an oxygen-nitrogen air mixture, the device (10) having, between an inlet (14) for the oxygen-nitrogen air mixture (16) and an outlet (26) for the oxygen separated, two instruments (18, 18', 22) which each have different permeability to oxygen and nitrogen, characterized in that the device (10) is divided by the instrument (18, 18', 22) into three chambers (12, 20, 24) and at least the second chamber (20) is connected to an outlet device (12, 30, 44) which has means (19, 21) which are more permeable to nitrogen than to oxygen.

10. Device according to Claim 9, characterized in that the instruments (18, 18', 22) are arranged independently of one another.

11. Device according to one of the preceding claims, characterized in that the first instrument (18, 18') operates pressure-dependently.

12. Device according to one of the preceding claims, characterized in that the second instrument (22) operates pressure-dependently and/or temperature-dependently.

13. Device according to one of the preceding claims, characterized in that a first chamber (12) is connected to the inlet (14) and a third chamber (24) is connected to the outlet (26).

14. Device according to one of the preceding claims, characterized in that the means (19, 21) are each formed by a membrane.

15. Device according to one of the preceding claims, characterized in that the first instrument (18) is arranged between the first chamber (12) and the second chamber (20), and the second instrument (22) is arranged between the second chamber (20) and the third chamber (24).

16. Device according to one of the preceding claims, characterized in that the first and second chambers (12, 20) can have a pressure (p1, p2) applied to them independently of one another.

17. Device according to one of the preceding claims, characterized in that the second chamber (20) can be heated.

18. Device according to one of the preceding claims, characterized in that the first instrument (18) is formed by a membrane whose transmission rate for oxygen O₂ and nitrogen N₂ when there is a pressure difference between the first chamber (12) and the second chamber (20) has different values, and which in particular is more permeable to oxygen than to nitrogen.

19. Device according to one of the preceding claims, characterized in that the first instrument (18') has, at least in regions, a zeolite (64) which has a structure that absorbs nitrogen N₂.

20. Device according to Claim 19, characterized in that the instrument (18') has channels (56, 58) which each have a region (62, 66) with zeolite (64) and which alternately can have the oxygen-nitrogen air mixture (16) applied to them and can be connected to the second chamber (20).

21. Device according to one of Claims 19 and 20, characterized in that the instrument (18') is assigned a delivery device (70) via which a negative pressure can be applied to the zeolite (64) in order to regenerate it.

22. Device according to one of the preceding claims, characterized in that the second instrument (22) consists of a ceramic membrane (54) which exhibits hybrid conduction and is arranged between the second chamber (20) and the third chamber (24).

## Revendications

1. Procédé servant a réduire des éléments polluants, en particulier des oxydes d'azote, contenus dans les gaz de combustion, lors d'un processus de combustion se déroulant avec apport d'oxygène, l'oxygène étant séparé d'un mélange d'air constitué d'oxygène et d'azote par un procédé en deux étapes,
caractérisé en ce que
dans au moins l'une des étapes le mélange d'air constitué d'oxygène et d'azote désenrichi en oxygène est évacué au moyen d'un dispositif de sortie, qui est pourvu de moyens, qui font en sorte que le dispositif de sortie est plus perméable a l'azote qu'à l'oxygène.

2. Procédé selon la revendication 1,
caractérisé en ce que
dans une première étape on extrait de l'azote du mélange d'air constitué d'oxygène et d'azote et l'on amène ensuite l'oxygène, de préférence exclusivement, qui provient du mélange d'air constitué d'oxygène et d'azote ainsi obtenu, enrichi en oxygène, au processus de combustion.

3. Procédé selon l'une des revendications précédentes,
caractérisé en ce que
l'on fait passer le mélange d'air constitué d'oxygène et d'azote pour l'enrichir en oxygène lors d'une première séquence du procédé à travers une barrière, qui est plus perméable à l'oxygène qu'à l'azote.

4. Procédé selon l'une des revendications précédentes,
caractérisé en ce que
le mélange d'air constitué d'oxygène et d'azote est délivré sous pression à la barrière et/ou au dispositif de sortie.

5. Procédé selon l'une des revendications précédentes,
caractérisé en ce que
dans une deuxième séquence du procédé on diffuse ensuite à partir du mélange d'air constitué d'oxygène et d'azote enrichi en oxygène, l'oxygène au moyen d'un dispositif de diffusion dans des gaz de combustion.

6. Procédé selon l'une des revendications précédentes, caractérisé en ce que
le mélange d'air constitué d'oxygène et d'azote enrichi en oxygène est comprimé.

7. Procédé selon l'une des revendications précédentes, caractérisé en ce que
le mélange d'air constitué d'oxygène et d'azote enrichi en oxygène est chauffé.

8. Procédé selon l'une des revendications précédentes, caractérisé en ce qu'
on exerce une influence sur la diffusion de l'oxygène dans les gaz de combustion par unité de temps en réglant la pression et/ou la température du mélange d'air constitué d'oxygène et d'azote enrichi en oxygène.

9. Dispositif servant à réduire des matières polluantes, en particulier des oxydes d'azote dans les gaz de combustion, dans le cas d'un processus de combustion qui se déroule en lui amenant de l'oxygène, avec un système servant à séparer l'oxygène d'un mélange d'air constitué d'oxygène et d'azote, le dispositif (10) présentant, entre un orifice d'entrée (14) pour le mélange d'air constitué d'oxygène et d'azote (16) et un orifice de sortie (26) pour l'oxygène séparé, deux dispositifs (18, 18', 22), qui présentent respectivement une perméabilité différente à l'oxygène et à l'azote,
caractérisé en ce que
le dispositif (10) est subdivisé au moyen des dispositifs (18, 18', 22) en trois chambres (12, 20, 24) et en ce que au moins la deuxième chambre (20) est reliée à un dispositif de sortie (12, 30, 44), qui présente des moyens (19, 21), qui sont plus perméables à l'azote qu'à l'oxygène.

10. Dispositif selon la revendication 9,
caractérisé en ce que
les dispositifs (18, 18', 22) sont disposés indépendamment les uns des autres.

11. Dispositif selon l'une des revendications précédentes, caractérisé en ce que
un premier dispositif (18, 18') fonctionne d'une façon dépendante de la pression.

12. Dispositif selon l'une des revendications précédentes, caractérisé en ce que
un deuxième dispositif (22) fonctionne d'une façon dépendante de la pression et/ou de la température.

13. Dispositif selon l'une des revendications précédentes, caractérisé en ce qu'
on relie une première chambre (12) à l'orifice d'entrée (14) et une troisième chambre (24) à l'orifice de sortie (26).

14. Dispositif selon l'une des revendications précédentes, caractérisé en ce que
les moyens (19, 21) sont constitués respectivement par une membrane.

15. Dispositif selon l'une des revendications précédentes, caractérisé en ce que
le premier dispositif (18) est disposé entre la première chambre (12) et la deuxième chambre (20) et le deuxième dispositif (22) est disposé entre la deuxième chambre (20) et la troisième chambre (24).

16. Dispositif selon l'une des revendications précédentes, caractérisé en ce que
la première chambre et la deuxième chambre (12, 20) sont indépendamment l'une de l'autre alimentées sous une pression (p1, p2).

17. Dispositif selon l'une des revendications précédentes, caractérisé en ce que
la deuxième chambre (20) peut être chauffée.

18. Dispositif selon l'une des revendications précédentes, caractérisé en ce que
le premier dispositif (18) est constitué par une membrane, dont les taux de traversée pour l'oxygène O₂ et pour l'azote N2 sont de grandeur différente dans le cas où il y a une différence de pression entre la première chambre (12) et la deuxième chambre (20), et qui est en particulier plus perméable à l'oxygène qu'à l'azote.

19. Dispositif selon l'une des revendications précédentes, caractérisé en ce que
le premier dispositif (18) présente au moins localement une zéolite (64) qui possède une structure qui absorbe de l'azote N₂.

20. Dispositif selon la revendication 19,
caractérisé en ce que
le dispositif (18') présente des canaux (56, 58), qui possèdent respectivement une zone (62, 66) avec de la zéolite (64) et qui peuvent être alimentés de façon alternée avec le mélange d'air constitué d'oxygène et d'azote (16) et peuvent être reliés à la deuxième chambre (20).

21. Dispositif selon l'une des revendications 19 ou 20, caractérisé en ce que
le dispositif (18')est associé à un dispositif de transfert (70), par l'intermédiaire duquel on peut mettre la zéolite (64) en dépression aux fins de régénération.

22. Dispositif selon l'une des revendications précédentes, caractérisé en ce que
le deuxième dispositif (22) consiste en une membrane en céramique (54) à conduction mixte, qui est disposée entre la deuxième chambre (20) et la troisième chambre (24).
